# EUROPÄISCHE PATENTSCHRIFT

(11) **EP 3 501 952 B1**
(45) Veröffentlichungstag und Bekanntmachung des Hinweises auf die Patenterteilung: **06.01.2021**
(21) Anmeldenummer: 18209155.3
(22) Anmeldetag: 29.11.2018
(51) Int. Cl.: B62D 21/18, B66F 9/075

(54) **TOLERANZAUSGLEICH BEI MONTAGETEILEN IN BAUGRUPPEN DURCH ELASTISCHE ELEMENTE**
TOLERANCE COMPENSATION IN ASSEMBLED PARTS IN COMPONENTS BY MEANS OF ELASTIC ELEMENTS
COMPENSATION DE LA TOLÉRANCE DES ÉLÉMENTS DE MONTAGE DANS DES MODULES AU MOYEN DES ÉLÉMENTS ÉLASTIQUES

(30) Priorität: 19.12.2017 DE 102017223232
(43) Veröffentlichungstag der Anmeldung: 26.06.2019
(73) Patentinhaber: Jungheinrich Aktiengesellschaft, 22047 Hamburg (DE)
(72) Erfinder: PETZ, Daniel, 84072 Osseltshausen (DE); HUTTER, Michael, 85406 Zolling (DE); GEINER, Richard, 84184 Obergolding (DE)
(74) Vertreter: Weickmann & Weickmann PartmbB

(56) Entgegenhaltungen:
- DE-A1- 4 316 600
- DE-A1- 10 013 079
- DE-A1- 10 248 657
- US-A1- 2002 084 132

## Beschreibung

Die vorliegende Erfindung betrifft einen Fahrzeugrahmen, insbesondere für ein Flurförderzeug, umfassend einen rechten und einen linken sich von einer Basis im Wesentlichen in Fahrzeugrichtung von der Fahrzeugmitte weg erstreckenden Flansch, zwischen welchen eine sich in Breitenrichtung des Fahrzeugs erstreckende Antriebsachsen-Baugruppe montierbar ist, und eine in Breitenrichtung des Fahrzeugs verlaufende und die beiden Flansche an ihrer jeweiligen Basis verbindende Verbindungswand.

Derartige Fahrzeugrahmen finden beispielsweise in Gegengewicht-Gabelstaplern Verwendung und sind als Schweißbaugruppen durch Verschweißen von Blechen, beispielsweise Stahlblechen, gebildet. Ein Beispiel für einen derartigen Fahrzeugrahmen ist unter anderem in der DE 102 48 657 A1 beschrieben. Der in dieser Druckschrift gezeigte Fahrzeugrahmen ist im Bereich der zum Montieren der Antriebsachsen-Baugruppe vorgesehenen Flansche als steife Schweißbaugruppe ausgeführt.

Derartige einstückig verschweißte Rahmen werden aus Gründen der Handhabung, der Lagerung und des Fertigungsablaufs gegenüber Fahrzeugrahmen bevorzugt, die aus zwei einzelnen Schweißbaugruppen bestehen. Um in diesen einstückigen Rahmen nach dem Einbau einer Antriebsachsen-Baugruppe keine übermäßigen Spannungen oder Überbeanspruchungen des Rahmen hervorzurufen, müssen sämtliche Fertigungstoleranzen im Bereich des Vorbaus des Rahmens und insbesondere der Flansche äußerst genau eingehalten werden. Die Montage der Antriebsachsen-Baugruppe erfolgt nämlich als sogenannte "Zwischenflansch-Montage", d.h. die Antriebsachse wird zwischen die Flansche des Rahmens eingeschoben und dann von außen an den Flanschen verschraubt.

Um eine derartige Montage zu ermöglichen, muss der Abstand der Rahmenflansche in Breitenrichtung des Fahrzeugs offensichtlich zunächst einmal größer sein als der Abstand der entsprechenden Gegenflansche der Antriebsachsen-Baugruppe, es muss also ein Montagespiel vorhanden sein, damit die Baugruppe ohne erhöhten Kraftaufwand oder die Gefahr von Beschädigungen zwischen die Rahmenflansche eingeführt werden kann, bevor sie schließlich an diesen montiert werden kann.

Während der Montage werden durch das Verschrauben der Rahmenflansche und der Antriebsachseneinheit die Rahmenflansche in Richtung aufeinander zu gespannt und/oder die Flansche der Antriebsachsen-Baugruppe werden auseinandergestreckt. Es herrscht somit eine Montagevorspannung, die im Wesentlichen über die Steifigkeit der Bauteile und die Größe des Montagespalts bestimmt ist. Diese auf die montierten Bauteile wirkende Spannung beansprucht diese Bauteile zusätzlich zu den ohnehin schon auftreffenden Betriebskräften und erfordert eine Überdimensionierung der genannten Bauteile bzw. mindert ihre Lebensdauer.

Zur Verringerung der eben diskutierten Montagevorspannung können zunächst einmal die Montagespalte verringert werden, d.h. der Abstand der Flansche des Fahrzeugrahmens möglichst genau auf die Außenabmessungen der Antriebsachsen-Baugruppe und insbesondere der daran vorgesehenen Montageflansche abgestimmt werden. Eine präzisere Fertigung gattungsgemäßer Rahmen ist jedoch stets mit erhöhtem Arbeitsaufwand und ebenfalls erhöhten Kosten verbunden, da sämtliche während des Verschweißens des Rahmens und auch bereits bei der Herstellung der zu verschweißenden Blechteile auftretenden Toleranzen möglichst gering gehalten werden müssen. Andererseits sind derartige Toleranzen nie ganz zu vermeiden, da unter anderem bei den zur Herstellung des Rahmens durchzuführenden Schweißvorgängen thermische Beanspruchungen und Verzugsprozesse auftreten und hierdurch die Präzision bei der Fertigung des Rahmens nicht beliebig erhöht werden kann.

Eine weitere Möglichkeit zur Verringerung von Montagespannungen nach Einbau der Antriebsachsen-Baugruppe in gattungsgemäßen Rahmen besteht darin, diese Rahmen mit einer verminderten Steifigkeit herzustellen, so dass die Montagespannungen leichter vom Rahmen aufgenommen werden können. Dies ist in der Regel hingegen in der Antriebsachsen-Baugruppe nicht möglich, da diese üblicherweise als steife Gusskonstruktion ausgeführt ist. Allerdings führt eine verminderte Steifigkeit des Rahmens zu nachteilhaften Fahreigenschaften des Fahrzeugs, insbesondere da im Bereich der Antriebsachse im Betrieb des Fahrzeugs mit großen Kräften und Scherungen zu rechnen ist.

Weiterhin ist aus der DE 10 2011 011 721 A1 ein zweiteiliger Rahmen bekannt, der aus einer linken und einer rechten Hälfte besteht, die unter anderem im Bereich einer hinter der Antriebsachsen-Baugruppe in Breitenrichtung des Fahrzeugs verlaufenden Querwand lösbar, beispielweise durch eine Schraubverbindung, verbunden sind. Zwar lässt sich das oben angesprochene Problem der Montagevorspannung durch diesen zweiteiligen Rahmen prinzipiell lösen, jedoch hat auch dieser Rahmen einige wesentliche Nachteile. Zum einen sorgt er bereits vor seiner Montage für einen erhöhten Handhabungsaufwand, da stets zwei Rahmenteile vorzusehen sind, die einzeln zu transportieren und zu bearbeiten sind. Andererseits sorgt er auch durch seine Verschraubung für einen höheren Montageaufwand, insbesondere da die Reihenfolge seiner Montageschritte unbedingt eingehalten werden muss. Hierdurch entstehen letztlich auch erhöhte Kosten für die beschriebene zweiteilige Lösung.

Es ist daher die Aufgabe der vorliegenden Erfindung, einen einstückig geschweißten Fahrzeugrahmen zur Verfügung zu stellen, in welchem bei einer Montage einer Antriebsachsen-Baugruppe ein Toleranzausgleich herbeigeführt wird, wenn die genannte Antriebsachsen-Baugruppe in einer Zwischenflanschmontage eingebaut wird. Hierdurch werden Spannungen in dem Fahrzeugrahmen vermindert, was zu verbesserten Fahreigenschaften, einer längeren Lebensdauer und niedrigeren Kosten führen wird.

Zur Lösung dieser Aufgabe weist die Verbindungswand des erfindungsgemäßen Fahrzeugrahmens wenigstens einen in Breitenrichtung verformbaren Abschnitt auf, welcher bei Montage der Antriebsachsen-Baugruppe eine Bewegung der beiden Flansche in Breitenrichtung des Fahrzeugs relativ zueinander ermöglicht. Durch das Vorsehen dieses wenigstens einen verformbaren Abschnitts können gezielt Toleranzen ausgeglichen werden, ohne dass hierdurch die Festigkeit und Stabilität der den Fahrzeugrahmen bildenden Schweißbaugruppen wesentlich beeinträchtigt werden. Dies gilt insbesondere hinsichtlich Scherkräften zwischen den beiden Flanschen, die beispielsweise durch Überfahrt einer Unebenheit mit einem der der Antriebsachsen-Baugruppe zugeordneten Rädern entstehen können, da diese Scherkräfte weiterhin von dem elastischen Abschnitt zwischen den beiden Flanschen übertragen werden können, was bei einer durchbrochenen Verbindungswand nicht der Fall wäre und zu einer starken Torsion des Rahmens führen könnte.

In diesem Zusammenhang ist unter dem Begriff der "Verformbarkeit" des wenigstens einen verformbaren Abschnitts zu verstehen, dass dieser Abschnitt oder diese Abschnitte unter den Bedingungen einer Zwischenflanschmontage der Antriebsachsen-Baugruppe eine Verformung durchläuft bzw. durchlaufen, während die ihn/sie umgebenden Abschnitte der Verbindungswand keine oder wenigstens eine wesentlich geringere Verformung durchlaufen. Somit zeichnet sich der wenigstens eine verformbare Abschnitt durch eine in Bezug auf die Fahrzeug-Breitenrichtung verringerte Steifigkeit gegenüber benachbarten Abschnitten der Verbindungswand aus.

Hierbei kann der wenigstens eine verformbare Abschnitt plastisch verformbar, elastisch verformbar oder plastisch-elastisch verformbar gebildet sein. Im Falle einer Mehrzahl von verformbaren Abschnitten sind selbstverständlich auch beliebige Kombinationen der Verformungseigenschaften der einzelnen Abschnitte möglich. Insbesondere kann eine elastische Verformbarkeit von wenigstens einem verformbaren Abschnitt von Vorteil sein, da hierdurch ein Austausch der Antriebsachsen-Baugruppe erleichtert oder gar erst ermöglicht wird, da der wenigstens eine verformbare Abschnitt bei einer Demontage der Antriebsachsen-Baugruppe wieder in seinen ursprünglichen Zustand übergehen wird und eine erneute Montage derselben oder einer anderen Antriebsachsen-Baugruppe in einfacher Weise wiederholt möglich ist.

In einer bevorzugten Ausführungsform kann der erfindungsgemäße Fahrzeugrahmen ferner einen Unterboden umfassen, welcher auf der den Flanschen gegenüberliegenden Seite der Verbindungswand im Bereich des wenigstens einen verformbaren Abschnitts eine Durchbrechung aufweist. Durch diese Maßnahme wird die Verformung des wenigstens einen verformbaren Abschnitts vereinfacht und durch die Montage der Antriebsachsen-Baugruppe auftretende Spannungen im Unterboden können verringert werden. Die Maße und Form der Durchbrechung/en können hierbei an die zu erwartenden Montagespiele angepasst sein, um einen optimalen Ausgleich zwischen Steifigkeit des Rahmens und Verformbarkeit des verformbaren Abschnitts zu erzielen.

Zur Verringerung der genannten Spannungen in dem erfindungsgemäßen Fahrzeugrahmen kann ebenfalls beigetragen werden, wenn sich der wenigstens eine verformbare Abschnitt über die gesamte Höhe der Verbindungswand erstreckt. Selbstverständlich wäre je nach sonstiger Gestaltung des Fahrzeugrahmens allerdings auch denkbar, den verformbaren Abschnitt lediglich über einen Teil der Höhe der Verbindungswand vorzusehen, bzw. im Falle mehrerer verformbarer Abschnitte eine beliebige Kombination der genannten Möglichkeiten.

Die verringerte Steifigkeit des wenigstens einen verformbaren Abschnitts bezüglich der Breitenrichtung des Fahrzeugs kann auf verschiedene Weise erzielt werden. Beispielsweise kann in einer besonders einfachen Ausführungsform der wenigstens eine verformbare Abschnitt aus einem verglichen mit der Verbindungswand weicheren Material gefertigt sein, beispielsweise einem Kunststoff- oder Verbundmaterial.

Andererseits kann der wenigstens eine verformbare Abschnitt auch aus demselben Material wie die Verbindungswand gefertigt sein, wobei er sich dann beispielsweise durch eine verringerte Materialstärke gegenüber der Verbindungswand auszeichnen kann und hierdurch seine Verformbarkeit erhalten kann. Im Falle von mehreren verformbaren Abschnitten sind auch beliebige Kombinationen der genannten Materialien für die mehreren Abschnitte einsetzbar. Je nach eingesetzten Materialien für die Verbindungswand und den jeweiligen verformbaren Abschnitt können diese beiden formschlüssig oder auch stoffschlüssig miteinander verbunden sein, beispielsweise können sie verschweißt sein, was insbesondere bei Verwendung von gleichen Materialien für die Verbindungswand und den verformbaren Abschnitt eine praktikable Lösung darstellt.

In einer alternativen Ausführungsform kann der wenigstens eine verformbare Abschnitt jedoch bereits einteilig mit der Verbindungswand gebildet sein, so dass die Verbindungswand und der verformbare Abschnitt beispielsweise durch ein Blechbiegeteil dargestellt sein können.

In diesem Fall oder auch im Fall von getrennt ausgebildeter Verbindungswand und wenigstens einem elastischem Abschnitt kann die verringerte Steifigkeit des verformbaren Abschnitts beispielsweise durch eine Profilierung gegenüber der Ebene der Verbindungswand gebildet sein, beispielsweise indem der verformbare Abschnitt mit einem halbkreisförmigen oder dreieckigen Querschnitt gebildet ist, der bei einer Zwischenflanschmontage durch die in der Ebene der Verbindungswand verlaufenden Kräfte wesentlich leichter verformt wird als die Verbindungswand selbst.

Um eine vorteilhafte Verteilung der im Rahmen während der Montage der Antriebsachsen-Baugruppe und auch im anschließenden Betrieb auftretenden Kräfte gewährleisten zu können, kann es vorteilhaft sein, wenn der wenigstens eine verformbare Abschnitt bezüglich der beiden Flansche symmetrisch an der Verbindungswand angeordnet ist.

Um ferner eine verbesserte Abstützung der Antriebsachsen-Baugruppe oder auch anderer Anbauteile im Bereich zwischen den beiden Flanschen und der Verbindungswand von unten her sicherstellen zu können, kann sich zwischen der Verbindungswand und dem rechten und/oder linken Flansch eine im Wesentlichen horizontal verlaufende Auflage erstrecken, an der dann weitere Montagepunkte für Baugruppen oder Komponenten vorgesehen sein können.

Des Weiteren betrifft die vorliegende Erfindung ein Fahrzeug, insbesondere ein Flurförderzeug, weiter insbesondere einen Gegengewicht-Gabelstapler, umfassend einen erfindungsgemäßen Fahrzeugrahmen sowie eine zwischen dem rechten und linken Flansch montierte Antriebsachsen-Baugruppe.

Weitere Merkmale und Vorteile der vorliegenden Erfindung werden anhand der nachfolgenden Beschreibung einer Ausführungsform deutlich, wenn diese zusammen mit den beiliegenden Figuren betrachtet wird. Diese zeigen im Einzelnen:
- Figur 1: eine Ausführungsform eines erfindungsgemäßen Fahrzeugrahmens in einer schrägen Draufsicht; und
- Figur 2: den Fahrzeugrahmen aus Figur 1 in einer senkrechten Draufsicht.

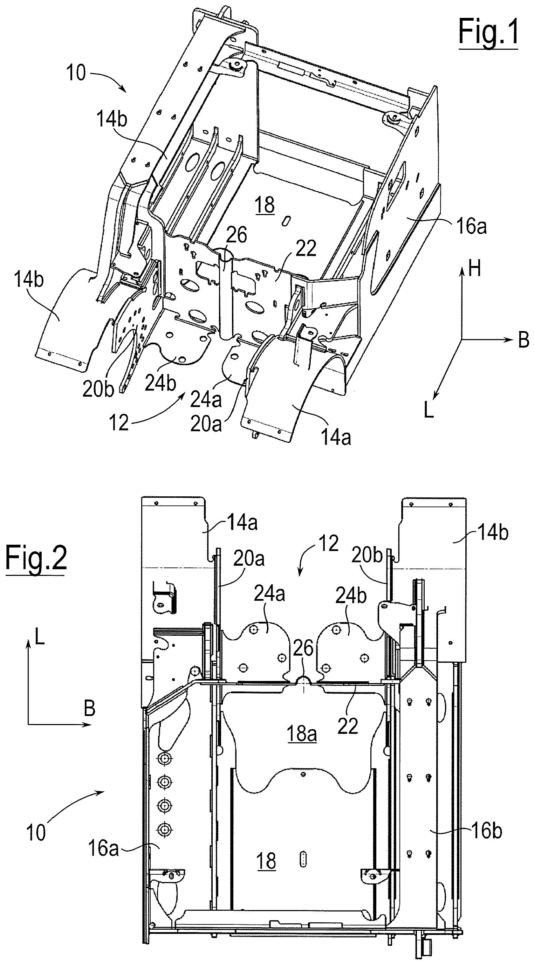

In Figur 1 ist ein erfindungsgemäßer Fahrzeugrahmen eines Gegengewicht-Gabelstaplers in schräger Draufsicht gezeigt und ganz allgemein mit dem Bezugszeichen 10 bezeichnet. Derselbe Fahrzeugrahmen 10 ist in Figur 2 erneut in senkrechter Draufsicht gezeigt.

Der Fahrzeugrahmen 10 ist als Schweißbaugruppe gebildet, d.h. aus vorbereiteten Blechbauteilen, die miteinander verschweißt worden sind, um dem Rahmen 10 seine letztendliche Form zu geben. Weiterhin sind in der Figur 1 die prinzipiellen Richtungen bzw. Achsen des Rahmens 10 durch Pfeile angedeutet, nämlich die Längsrichtung L, die Breitenrichtung B und die Höhenrichtung H.

Es sei darauf hingewiesen, dass in mit einem derartigen Rahmen ausgerüsteten Fahrzeugen, d.h. insbesondere in Gabelstaplern, in der Regel die Hinterachse gelenkt und die Vorderachse ungelenkt aber angetrieben ist. Somit befindet sich im in Längsrichtung L vorderen Bereich des Fahrzeugrahmens 10 ein Einbauraum 12, in dem eine (nicht gezeigte) Antriebsachsen-Baugruppe montierbar ist, deren Räder sich dann in Breitenrichtung B rechts und links unterhalb der Kotflügel 14a und 14b des Fahrzeugrahmens 10 erstrecken.

Des Weiteren umfasst der Fahrzeugrahmen 10 an sich bekannte Bauelemente, wie beispielsweise Seitenkästen 16a und 16b zur Aufnahme von Hydrauliktanks und ähnlichem sowie einen Unterboden 18 zur Versteifung und Abstützung von innerhalb des Rahmens 10 angeordneten Betriebskomponenten.

Zur Montage der bereits angesprochenen und für den Einbau in dem Montageraum 12 vorgesehen Antriebsachsen-Baugruppe umfasst der Rahmen in Breitenrichtung B innerhalb der Kotflügelabschnitte 14a und 14b jeweils einen rechten und einen linken Flanschabschnitt 20a und 20b, die jeweils eine Mehrzahl von Montagepunkten aufweisen, mittels derer die in Figur 1 nicht gezeigte Antriebsachsen-Baugruppe mit dem Rahmen verschraubt werden kann.

Die beiden Flansche 20a und 20b erstrecken sich hierbei von einer jeweiligen Basis in Längsrichtung L des Rahmens 10 und sind im Bereich ihrer jeweiligen Basis durch eine Verbindungswand 22 verbunden, die einerseits den Innenraum des Fahrzeugrahmens 10 nach vorne begrenzt und andererseits zur Versteifung des Rahmens 10 im Bereich der Vorderachse in Breitenrichtung B beiträgt. Des Weiteren sind noch zwei Auflageabschnitte 24a und 24b erkennbar, die sich jeweils von einem der Flanschabschnitte 20a und 20b zu einem Bereich der Verbindungswand 22 erstrecken und eine zusätzliche Versteifung des Rahmens herbeiführen sowie zur Aufnahme von weiteren Komponenten dienen können.

Zum Durchführen der bereits mehrfach angesprochenen Montage einer nicht gezeigten Antriebsachsen-Baugruppe zwischen den beiden Flanschen 20a und 20b muss diese Baugruppe zunächst einmal in Längsrichtung L des Fahrzeugrahmens 10 zwischen die beiden Flansche 20a und b eingeführt und anschließend jeweils von außen mit diesen verschraubt werden. Offensichtlich muss hierzu der Abstand der beiden Flansche 20a und 20b größer sein als die Außenabmessungen der zu montierenden Baugruppe, wobei das derart vorzusehende Montagespiel dann während des Verschraubens durch eine Verformung des Rahmens 10 gegenüber der äußerst steif gebildeten Antriebsachsen-Baugruppe ausgeglichen wird.

Um diese Verformung des Rahmens 10 zu ermöglichen, ist im Bereich der Verbindungswand 22 ein einzelner elastisch verformbarer Abschnitt 26 vorgesehen, der in dem gezeigten Ausführungsbeispiel aus einem mit der Verbindungswand 22 entlang zweier Schweißnähte verbundenen Blechabschnitt mit halbkreisförmigem Querschnitt gebildet ist. Dieser verformbare Abschnitt 26 ist insbesondere auch in der senkrechten Draufsicht auf den Rahmen 10 aus Figur 2 noch einmal deutlich zu erkennen.

Da bei der oben beschriebenen Montage der Antriebsachsen-Baugruppe die auf die Flansche wirkende Kraft in Breitenrichtung B des Rahmens 10 im Wesentlichen nach innen und damit parallel zu der Ebene der Verbindungswand 22 wirkt, wird sich bei dieser Montage der verformbare Abschnitt 26 derart verformen, dass seine beiden Schweißnähte mit der Verbindungswand 22 sich aufeinander zu bewegen werden und sich hierbei die Verbindungswand 22 selbst praktisch nicht verformt.

Um diese Verformung des verformbaren Abschnitts zu ermöglichen ist, wie in Figur 2 zu erkennen, ferner der Unterboden 18 im Bereich in Längsrichtung L hinter der Verbindungswand 22 mit einer Ausnehmung 18a bereitgestellt, um in diesem Bereich das Auftreten von Spannungsspitzen in dem Fahrzeugrahmen 10 zu verhindern.

## Patentansprüche

1. Fahrzeugrahmen, insbesondere für ein Flurförderzeug, umfassend:
- einen rechten und einen linken sich von einer Basis im Wesentlichen in Fahrzeug-Längsrichtung (L) von der Fahrzeugmitte weg erstreckenden Flansch (20a, 20b), zwischen welchen eine sich in Breitenrichtung (B) des Fahrzeugs erstreckende Antriebsachsen-Baugruppe montierbar ist;
- eine in Breitenrichtung (B) des Fahrzeugs verlaufende und die beiden Flansche (20a, 20b) an ihrer jeweiligen Basis verbindende Verbindungswand (22);
**dadurch gekennzeichnet, dass** die Verbindungswand (22) wenigstens einen in Breitenrichtung (B) verformbaren Abschnitt (26) aufweist, welcher bei Montage der Antriebsachsen-Baugruppe eine Bewegung der beiden Flansche (20a, 20b) in Breitenrichtung (B) des Fahrzeugs relativ zueinander ermöglicht.

2. Fahrzeugrahmen nach Anspruch 1, **dadurch gekennzeichnet, dass** der wenigstens eine verformbare Abschnitt (26) elastisch verformbar gebildet ist.

3. Fahrzeugrahmen nach Anspruch 1 oder 2, **dadurch gekennzeichnet, dass** er einen Unterboden (18) umfasst, welcher auf der den Flanschen (20a, 20b) gegenüberliegenden Seite der Verbindungswand (22) im Bereich des wenigstens einen verformbaren Abschnitts (26) eine Durchbrechung (18a) aufweist.

4. Fahrzeugrahmen nach einem der vorhergehenden Ansprüche, **dadurch gekennzeichnet, dass** sich der wenigstens eine verformbare Abschnitt (26) über die gesamte Höhe der Verbindungswand (22) erstreckt.

5. Fahrzeugrahmen nach einem der vorhergehenden Ansprüche, **dadurch gekennzeichnet, dass** der wenigstens eine verformbare Abschnitt (26) aus demselben Material wie die Verbindungswand (22) gefertigt ist.

6. Fahrzeugrahmen nach einem der Ansprüche 1 bis 4, **dadurch gekennzeichnet, dass** der wenigstens eine verformbare Abschnitt (26) aus einem verglichen mit der Verbindungswand (22) weicheren Material gefertigt ist.

7. Fahrzeugrahmen nach einem der vorhergehenden Ansprüche, **dadurch gekennzeichnet, dass** der wenigstens eine verformbare Abschnitt (26) stoffschlüssig mit der Verbindungswand (22) verbunden ist, beispielsweise mit ihr verschweißt ist.

8. Fahrzeugrahmen nach einem der Ansprüche 1 bis 6, **dadurch gekennzeichnet, dass** der wenigstens eine verformbare Abschnitt (26) einteilig mit der Verbindungswand (22) gebildet ist.

9. Fahrzeugrahmen nach einem der vorhergehenden Ansprüche, **dadurch gekennzeichnet, dass** der wenigstens eine verformbare Abschnitt (26) eine Profilierung gegenüber der Ebene der Verbindungswand (22) aufweist, beispielsweise mit einem halbkreisförmigen oder dreieckigen Querschnitt gebildet ist.

10. Fahrzeugrahmen nach einem der vorhergehenden Ansprüche, **dadurch gekennzeichnet, dass** der wenigstens eine verformbare Abschnitt (26) bezüglich der beiden Flansche (20a, 20b) symmetrisch an der Verbindungswand (22) angeordnet ist.

11. Fahrzeugrahmen nach einem der vorhergehenden Ansprüche, **dadurch gekennzeichnet, dass** sich zwischen der Verbindungswand (22) und dem rechten und/oder linken Flansch (20a, 20b) eine im Wesentlichen horizontal verlaufende Auflage (24a, 24b) erstreckt.

12. Fahrzeug, insbesondere Flurförderzeug, weiter insbesondere Gegengewicht-Gabelstapler, umfassend einen Fahrzeugrahmen nach einem der vorhergehenden Ansprüche sowie eine zwischen dem rechten und linken Flansch (20a, 20b) montierte Antriebsachsen-Baugruppe.

## Claims

1. Vehicle frame, in particular for an industrial truck, comprising:
- a right and a left flange (20a, 20b) which extend from a base substantially in a vehicle longitudinal direction (L) away from the vehicle centre and between which a drive axle assembly extending in a width direction (B) of the vehicle can be mounted;
- a connecting wall (22) which extends in the width direction (B) of the vehicle and connects the two flanges (20a, 20b) at their respective bases;
**characterised in that** the connecting wall (22) has at least one portion (26) which is deformable in the width direction (B) and which allows the two flanges (20a, 20b) to move relative to one another in the width direction (B) of the vehicle when the drive axle assembly is mounted.

2. Vehicle frame according to claim 1, **characterised in that** the at least one deformable portion (26) is elastically deformable.

3. Vehicle frame according to either claim 1 or claim 2, **characterised in that** said frame comprises an underbody (18) which, on the side of the connecting wall (22) opposite the flanges (20a, 20b), has an opening (18a) in the region of the at least one deformable portion (26).

4. Vehicle frame according to any of the preceding claims, **characterised in that** the at least one deformable portion (26) extends over the entire height of the connecting wall (22).

5. Vehicle frame according to any of the preceding claims, **characterised in that** the at least one deformable portion (26) is made of the same material as the connecting wall (22).

6. Vehicle frame according to any of claims 1 to 4, **characterised in that** the at least one deformable portion (26) is made of a material that is softer compared with the connecting wall (22).

7. Vehicle frame according to any of the preceding claims, **characterised in that** the at least one deformable portion (26) is integrally bonded to the connecting wall (22), for example is welded thereto.

8. Vehicle frame according to any of claims 1 to 6, **characterised in that** the at least one deformable portion (26) is formed in one piece with the connecting wall (22).

9. Vehicle frame according to any of the preceding claims, **characterised in that** the at least one deformable portion (26) is profiled with respect to the plane of the connecting wall (22), for example is formed so as to have a semicircular or triangular cross section.

10. Vehicle frame according to any of the preceding claims, **characterised in that** the at least one deformable portion (26) is arranged symmetrically on the connecting wall (22) with respect to the two flanges (20a, 20b).

11. Vehicle frame according to any of the preceding claims, **characterised in that** a substantially horizontally extending support (24a, 24b) extends between the connecting wall (22) and the right and/or the left flange (20a, 20b).

12. Vehicle, in particular industrial truck, more particularly counterbalance forklift truck, comprising a vehicle frame according to any of the preceding claims and a drive axle assembly mounted between the right and the left flange (20a, 20b).

## Revendications

1. Châssis de véhicule, en particulier pour un chariot de manutention, comprenant :
- une bride droite et une bride gauche (20a, 20b) s'étendant à partir d'une base sensiblement dans la direction longitudinale du véhicule (L) en s'éloignant du centre du véhicule, entre lesquelles peut être monté un module d'arbre de transmission s'étendant dans la direction de la largeur du véhicule (B);
- une paroi de liaison (22) s'étendant dans la direction de la largeur du véhicule (B) et reliant les deux brides (20a, 20b) à leurs bases respectives ;
**caractérisé en ce que** la paroi de liaison (22) comporte au moins une section déformable (26) dans le sens de la largeur (B) qui, lorsque le module d'arbre de transmission est monté, permet aux deux brides (20a, 20b) de se déplacer l'une par rapport à l'autre dans le sens de la largeur du véhicule (B).

2. Châssis de véhicule selon la revendication 1, **caractérisé en ce que** ladite au moins une section déformable (26) est formée de manière élastiquement déformable.

3. Châssis de véhicule selon la revendication 1 ou 2, **caractérisé en ce qu'**il comprend un dessous de caisse (18) qui présente une ouverture (18a) sur le côté de la paroi de liaison (22) opposé aux brides (20a, 20b) dans la région de ladite au moins une section déformable (26).

4. Châssis de véhicule selon l'une des revendications précédentes, **caractérisé en ce que** ladite au moins une section déformable (26) s'étend sur toute la hauteur de la paroi de liaison (22)

5. Châssis de véhicule selon l'une des revendications précédentes, **caractérisé en ce que** ladite au moins une section déformable (26) est constituée du même matériau que la paroi de liaison (22).

6. Châssis de véhicule selon l'une des revendications 1 à 4, **caractérisé en ce que** ladite au moins une section déformable (26) est constituée d'un matériau plus souple que la paroi de liaison (22).

7. Châssis de véhicule selon l'une des revendications précédentes, **caractérisé en ce que** ladite au moins une partie déformable (26) est reliée à la paroi de liaison (22) par une liaison de matière, par exemple soudée à celle-ci.

8. Châssis de véhicule selon l'une des revendications 1 à 6, **caractérisé en ce que** ladite au moins une section déformable (26) est formée d'une seule pièce avec la paroi de liaison (22).

9. Châssis de véhicule selon l'une des revendications précédentes, **caractérisé en ce que** ladite au moins une section déformable (26) présente un profil par rapport au plan de la paroi de liaison (22), par exemple est formée avec une section transversale semi-circulaire ou triangulaire.

10. Châssis de véhicule selon l'une des revendications précédentes, **caractérisé en ce que** ladite au moins une partie déformable (26) est disposée symétriquement sur la paroi de liaison (22) par rapport aux deux brides (20a, 20b).

11. Châssis de véhicule selon l'une des revendications précédentes, **caractérisé en ce qu'**un support sensiblement horizontal (24a, 24b) s'étend entre la paroi de liaison (22) et la bride droite et/ou gauche (20a, 20b).

12. Véhicule, notamment chariot de manutention, en outre notamment chariot élévateur à contrepoids, comprenant un châssis de véhicule selon l'une des revendications précédentes et un module d'arbre de transmission monté entre les brides droite et gauche (20a, 20b).
